**Europäisches Patentamt**

(19) **European Patent Office**

**Office européen des brevets**

(11) Numéro de publication: **0 055 678**
**B1**

(12) **FASCICULE DE BREVET EUROPEEN**

(45) Date de publication du fascicule du brevet:
**14.08.85**

(21) Numéro de dépôt: **81402100.2**

(22) Date de dépôt: **31.12.81**

(51) Int. Cl.⁴: **G 21 C 15/24**, F 16 F 7/10

(54) Dispositif amortisseur des vibrations d'une machine ou construction.

(30) Priorité: **31.12.80 FR 8027858**

(43) Date de publication de la demande:
**07.07.82 Bulletin 82/27**

(45) Mention de la délivrance du brevet:
**14.08.85 Bulletin 85/33**

(84) Etats contractants désignés:
**BE DE FR GB IT LU**

(56) Documents cités:
**FR - A - 800 121**
**FR - A - 999 128**
**FR - A - 1 128 974**
**FR - A - 1 580 754**
**FR - A - 2 228 177**
**GB - A - 744 041**
**GB - A - 1 032 232**
**US - A - 2 960 189**
**US - A - 3 690 414**
**US - A - 3 774 730**
**US - A - 4 050 665**

(73) Titulaire: **NOVATOME, 20 Avenue Edouard Herriot,**
**F-92350 Le Plessis Robinson (FR)**

(72) Inventeur: **Barbe, Gérard, 6bis rue des Houtraits,**
**F-92500 Rueil Malmaison (FR)**

(74) Mandataire: **Bressand, Georges et al, c/o CABINET**
**LAVOIX 2 Place d'Estienne d'Orves, F-75441 Paris**
**Cedex 09 (FR)**

## Description

L'invention concerne un dispositif amortisseur des vibrations d'une machine ou construction, par exemple une machine tournante à vitesse variable dont le fonctionnement engendre des vibrations dans la structure de la machine.

Dans le domaine des réacteurs nucléaires à neutrons rapides, les pompes destinées à faire circuler le fluide primaire du réacteur, de grandes dimensions, dont le moteur repose, lors des essais en eau sur une structure propre à ces essais, peuvent être le siège de vibrations dont la fréquence est variable, lorsque la vitesse de rotation du moteur de la pompe varie.

De façon plus générale, dans le cas de machines tournantes à vitesse fixe ou variable, les structures de support de ces machines présentent souvent une ou plusieurs fréquences propres qui, lorsqu'elles sont excitées par un déséquilibre de la partie tournante de la machine, peuvent entrainer des vibrations non souhaitables.

Dans le cas d'une machine à vitesse fixe, un équilibrage soigné de cette machine peut permettre de réduire considérablement les vibrations, même dans le cas où la vitesse de rotation de la machine correspond à la fréquence propre de la structure.

D'autre part, pour éviter les effets nocifs de ces vibrations ou pour les diminuer, on peut rigidifier les structures de support de la machine, modifier les masses fixes et mobiles et monter des amortisseurs de type visqueux entre la machine et des appuis fixes.

Cependant, dans certains cas on ne peut utiliser aucun de ces moyens, soit parce qu'il n'est pas possible de disposer d'appuis fixes, soit parce que l'installation présente plusieurs fréquences propres.

Dans le cas des machines tournantes à vitesse variable en particulier, on ne dispose d'aucun moyen satisfaisant pour réduire les vibrations ou pour protéger la machine contre leurs effets.

On a parfois utilisé des dispositifs amortisseurs combinant une pièce massive et un élément élastique qu'on fixe sur l'installation dont les vibrations mettent en mouvement la pièce massive. Le dispositif amortisseur est par exemple constitué par un corps cylindrique creux fermé par des fonds pleins contenant un liquide visqueux et renfermant la pièce massive maintenue à l'intérieur du corps creux par une tige disposée suivant l'axe du corps creux et par l'élément élastique constitué par exemple par un ou plusieurs ressorts.

L'inconvénient principal de ces dispositifs est de dédoubler la ou les fréquences propres initiales de l'installation en deux autres fréquences, l'amélioration n'étant effective qu'entre les deux fréquences (anti-résonance).

Cette solution n'est pas satisfaisante dans le cas d'une machine à vitesse variable.

Un tel dispositif est décrit par exemple dans le brevet GB-A-744.041 en référence à la figure 8, page 5, lignes 44 à 62. La pièce massive est montée sur une tige disposée axialement dans le corps creux et centrée dans le corps creux par des ressorts. La tige est simplement engagée dans des ouvertures prévues dans les fonds du corps creux.

Le but de l'invention est donc de proposer un dispositif amortisseur de vibration pour une machine ou une construction, dispositif qui comporte un corps cylindrique creux muni de moyens pour le relier à la machine ou la construction et est fermé par deux fonds pleins disposés à chacune de ses extrémités, ledit corps cylindrique creux renferme un liquide visqueux, une pièce massive de forme cylindrique immergée dans le liquide visqueux et montée coaxialement de façon élastique à l'intérieur du corps cylindrique creux, le liquide visqueux permet d'amortir les mouvements relatifs de la pièce massive par rapport audit corps cylindrique creux, et une tige métallique disposée coaxialement au corps cylindrique creux pour maintenir la pièce massive, dispositif qui permette d'atténuer sensiblement les vibrations, même dans le cas d'une machine tournante à vitesse variable et dans le cas d'une structure présentant plusieurs fréquences propres.

Dans ce but, la pièce massive est solidaire de la tige métallique, la tige métallique constitue l'élément élastique qui relie le corps cylindrique creux à la pièce massive, les extrémités non reliées à la pièce massive de la tige métallique sont fixées aux fonds pleins par l'intermédiaire de moyens qui permettent le réglage de l'intensité de la tension exercée sur ladite tige, et sous l'effet des vibrations à amortir, l'élasticité de ladite tige permet des mouvements alternatifs de la pièce massive selon des directions radiales par rapport à l'axe dudit corps cylindrique creux.

Afin de bien faire comprendre l'invention, on va maintenant décrire à titre d'exemple non limitatif, en se référant aux figures jointes en annexe, un mode de réalisation d'un dispositif amortisseur suivant l'invention, utilisé pour amortir les vibrations du moteur d'entrainement d'une pompe primaire d'un réacteur nucléaire à neutrons rapides lors de ses essais préliminaires en eau.

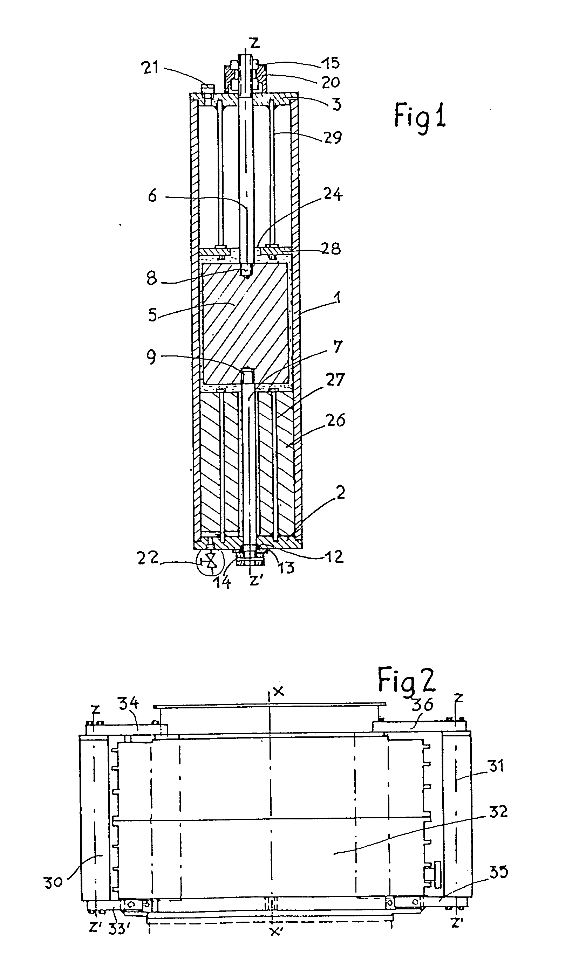

Sur la figure 1, on voit, dans une vue en coupe par un plan de symétrie, un dispositif amortisseur suivant l'invention.

A la figure 2, on voit, dans une vue en élévation, le moteur de la pompe primaire sur lequel ont été fixés plusieurs dispositifs suivant l'invention.

Sur la figure 1, on voit le corps creux cylindrique 1 du dispositif constitué par une portion de tube fermée à chacune de ses extrémités par des fonds pleins 2 et 3.

Le fond inférieur 2 est soudé à l'extrémité du tube 1 alors que le fond supérieur 3 est simplement centré sur l'extrémité supérieure du tube et appuyé sur celle-ci.

Une pièce de masse importante 5 de forme cylindrique est d'autre part disposée à l'intérieur du tube 1 grâce à une tige métallique en deux parties 6 et 7, l'axe de la pièce 5 étant confondu avec l'axe ZZ' du tube 1.

Les extrémités filetées 8 et 9 des tiges 6 et 7 respectivement sont engagées dans des trous taraudés ménagés à la partie supérieure et à la partie inférieure de la pièce cylindrique massive 5.

Les extrémités des tiges 6 et 7 non reliées à la pièce 5 traversent respectivement les fonds 3 et 2 qui comportent une ouverture circulaire à leur partie centrale.

L'extrémité inférieure de la tige 7 traversant le fond 2 est entourée par un joint d'étanchéité 12 maintenu en place par une rondelle 13 elle-même serrée contre la surface inférieure du fond 2 par un écrou 14 en prise avec l'extrémité inférieure de la tige 7 qui est filetée.

L'extrémité supérieure de la tige 6 passant au travers de l'ouverture ménagée dans le fond 3 est également filetée et un écrou 15 est engagé sur cette partie filetée.

Un vérin hydraulique 20 est d'autre part en prise avec l'écrou 15 pour exercer une force de traction sur la tige permettant de faire varier la tension de cette tige portant la masse 5. Le corps du vérin 20 est en appui sur le fond supérieur 3.

Le fond 3 est percé d'une ouverture qui peut être fermée par un bouchon 21 permettant d'introduire de l'huile dans le corps creux 1 jusqu'à un nievau 24, la pièce massive 5 étant entièrement plongée dans l'huile. Un dispositif de vidange 22 est d'autre part fixé sur le fond 2 pour vidange de l'huile contenue dans le corps creux 1.

Des corps morts de remplissage en polystirène sont d'autre part fixés sur le fond 2 par des tiges 27. D'autres corps de remplissage 28 en polystirène sont également fixés sur le fond supérieur 3 par l'intermédiaire de tiges 29.

Les corps morts 26 et 28 permettent d'utiliser une quantité moindre d'huile tout en maintenant une immersion complète de la pièce massive 5.

Sur la figure 2, on voit deux dispositifs amortisseurs 30 et 31, identiques au dispositif représenté sur la figure 1, fixés latéralement sur le moteur 32 d'une pompe primaire d'un réacteur nucléaire à neutrons rapides en essais en eau.

Les axes ZZ' des dispositifs amortisseurs 30 et 31 sont parallèles à l'axe XX' du moteur.

La fixation du dispositif amortisseur sur le corps du moteur 32 se fait par l'intermédiaire de bras tels que 33, 34 ou 35, 36 boulonnés sur le moteur 32 et sur les fonds supérieur et inférieur des amortisseurs 30 et 31.

En fonction de la dimension et de la masse des dispositifs amortisseurs, on peut disposer autour du moteur 32 un nombre variable de ces dispositifs amortisseurs, par exemple trois dispositifs à 120° ou six dispositifs avec un déplacement angulaire de 60°.

Par exemple, dans le cas d'une installation d'une masse de 700 tonnes on a utilisé trois dispositifs amortisseurs dont les pièces massives pesaient chacune 570 kg et dont la masse totale y compris les bras de fixation sur le moteur était de 1000 kg soit pour les trois dispositifs d'amortissement 1710 kg de masse mécanique active et 3000 kg de masse totale.

On a mesuré sur l'installation une fréquence propre voisine de 5 Hertz dont la masse modale est de 95 tonnes. On a également mesuré une second fréquence propre située au voisinage de 7 Hertz dont la masse modale est de 180 tonnes.

L'adjonction des dispositifs amortisseurs suivant l'invention a permis de réduire les amplitudes de vibrations de 276 μm à 104 μm en ce qui concerne la première fréquence, soit un rapport de 2,65 et de 178 μm à 108 μm, soit un rapport de 1,65 en ce qui concerne la second fréquence.

Les rapports de masse correspondants étaient de

$$\frac{1\,710}{95\,000} = 0,018$$

pour l'amortissement de la première fréquence propre et de

$$\frac{1\,710}{180\,000} = 0,0095$$

pour l'amortissement de la seconde fréquence propre.

Cet amortissement a pu être observé d'autre part pour différentes vitesses de rotation du moteur, dans sa plage de fonctionnement.

Ce résultat a pu être atteint en accordant la fréquence des dispositifs amortisseurs, en faisant varier la traction exercée par les vérins 20 sur les tiges de suspension des masses 5.

Les vibrations de la machine transmises à la masse 5 mettent cette masse en mouvement à l'intérieur du corps creux 1 rempli d'huile, si bien que l'huile est laminée dans l'espace annulaire existant entre le corps cylindrique et la masse en déplacement. Ce laminage de l'huile est responsable de l'amortissement observé.

D'autre part, la tension variable de la tige permet une adaptation du dispositif amortisseur à des vibrations de fréquences variables dans un certain intervalle.

On peut faire varier le facteur d'amortissement en choisissant une huile de viscosité plus ou moins grande pour remplir l'espace du corps creux où se déplace la masse 5.

La mise en service du dispositif est très facile puisqu'il suffit d'exercer une traction sur la tige lors de la mise en service du dispositif pour réaliser l'étanchéité à l'huile du fond inférieur 2.

Le remplissage peut alors être effectué par l'ouverture du fond supérieur, le bouchon 21 étant enlevé.

On peut alors exercer sur la tige la traction voulue, soit par l'intermédiaire de l'écrou de serrage 15, soit par l'intermédiaire du vérin 20, soit encore par l'intermédiaire du vérin puis de l'écrou placé en position de serrage.

Par ailleurs, il est possible d'utiliser une tige reliée à la pièce massive d'assez grande longueur tout en utilisant un volume d'huile réduit grâce à l'utilisation de corps morts. Pour une amplitude de déplacement donnée de la pièce massive, les contraintes dans la tige de grande longueur seront ainsi peu importantes.

Un des avantages du dispositif est d'être entièrement symétrique autour de son axe, ce qui facilite le couplage de ce dispositif amortisseur avec une machine tournante dont l'axe est parallèle à l'axe du dispositif.

D'autre part, en utilisant plusieurs dispositifs d'amortissement séparés, il est possible d'accorder chacun de ces dispositifs séparément sur une des fréquences propres de l'installation dans laquelle on réduit les vibrations.

Cette possibilité de scinder le disposöitif d'amortissement en plusieurs parties élémentaires d'encombrement réduit permet d'autre part une installation plus facile.

On voit donc que le dispositif suivant l'invention est d'une grande efficacité, qu'il peut être aisément installé sur des machines diverses, quelles que soient leurs dimensions et leur structure, et qu'il peut s'adapter à des conditions variables de fonctionnement de ces machines.

L'invention ne se limite pas au mode de réalisation qui vient d'être décrit; elle en comporte au contraire toutes les variantes.

C'est ainsi que la fixation et la mise en tension de la tige élastique dans le corps creux peuvent être réalisées par des moyens différents de système à vis et écrou ou à vérin hydraulique et que des moyens différents de corps morts remplissant une partie du volume interne du corps cylindrique creux peuvent être utilisés pour limiter le volume d'huile d'amortissement.

Par ailleurs, on peut grouper un nombre quelconque de dispositifs amortisseurs sur la machine ou installation dont on veut réduire les vibrations, la masse et la dimension de ces dispositifs amortisseurs élémentaires étant choisies en fonction des masses dont on veut amortir les vibrations et de l'encombrement acceptable du dispositif.

Enfin, le dispositif suivant l'invention est applicable non seulement pour l'amortissement des vibrations dans des moteurs d'entrainement de pompes mais encore dans d'autres machines tournantes telles que des broyeurs ou concasseurs ou encore des ventilateurs ou des turbomachines à haute vitesse fixés sur des structures présentant plusieurs fréquences propres.

Le dispositif amortisseur suivant l'invention s'applique également, en dehors du cas des machines tournantes, par exemple pour l'amortissement des vibrations dans des matériels de grandes dimensions et même dans des constructions dont on veut limiter les déplacements en cas de séisme sans renforcer les fixations.

**Revendications**

1. Dispositif amortisseur de vibration pour une machine ou une construction, dispositif qui comporte un corps cylindrique creux (1) muni de moyens pour le relier à la machine ou la construction et est fermé par deux fonds pleins (2, 3) disposés à chacune de ses extrémités, ledit corps cylindrique creux (1) renferme un liquide visqueux, une pièce massive (5) de forme cylindrique immergée dans le liquide visqueux et montée coaxialement de façon élastique à l'intérieur du corps cylindrique creux (1), le liquide visqueux permet d'amortir les mouvements relatifs de la pièce massive (5) par rapport audit corps cylindrique creux (1), et une tige métallique (6, 7) disposée coaxialement au corps cylindrique creux (1) pour maintenir la pièce massive (5), dispositif caractérisé en ce que la pièce massive (5) est solidaire de la tige métallique (6, 7), la tige métallique (6, 7) constitue l'élément élastique qui relie le corps cylindrique creux à la pièce massive (5), les extrémités non reliées à la pièce massive (5) de la tige métallique (6, 7) sont fixées aux fonds pleins (2, 3) par l'intermédiaire de moyens (20, 15) qui permettent le réglage de l'intensité de la tension exercée sur ladite tige (6, 7), et sous l'effet des vibrations à amortir, l'élasticité de ladite tige (6, 7) permet des mouvements alternatifs de la pièce massive (5) selon des directions radiales par rapport à l'axe dudit corps cylindrique creux (1).

2. Dispositif amortisseur suivant la revendication 1, caractérisé par le fait que des corps morts (26, 28) sont disposés à l'intérieur du corps creux cylindrique (1), pour limiter le volume du liquide visqueux à introduire dans ce corps creux pour immerger entièrement la pièce massive cylindrique (5).

3. Dispositif amortisseur suivant l'une quelconque des revendicatios 1 et 2, caractérisé par le fait qu'un des fonds (2, 3) au moins du corps creux cylindrique est percé d'une ouverture à sa partie centrale par laquelle passe une des parties terminales de la tige (6, 7) qui est filetée et peut recevoir un écrou de serrage (15) permettant de régler la tension de la tige.

4. Dispositif amortisseur suivant l'une quelconque des revendications 1 et 2, caractérisé par le fait qu'un des fonds (2, 3) au moins du corps creux cylindrique (1) est percé d'une ouverture centrale par laquelle passe une des parties terminales de la tige (6, 7) et qu'un vérin hydraulique (20) est fixé sur ce fond pour exercer une traction d'intensité variable sur la tige.

5. Dispositif amortisseur selon l'une quelconque des revendications 1 à 4, dans le cas d'une machine tournante, caractérisé par le fait que le corps creux cylindrique est fixé sur la machine tournante (32) de façon que son axe soit parallèle à l'axe de rotation de la machine.

6. Ensemble d'amortissement associé à une machine tournante, caractérisé par le fait qu'au moins deux dispositifs (30, 31) suivant l'une quelconque des revendications 1 à 5 sont fixés à la périphérie de la machine tournante avec leur axe parallèle à l'axe de rotation de cette machine (32).

**Patentansprüche**

1. Schwingungsdämpfer für eine Maschine

**7** 0 055 678 **8**

oder ein Bauwerk bestehend aus einem zylindrischen Hohlkörper (1) mit Mitteln zu dessen Verbindung mit der Maschine oder dem Bauwerk, und der durch zwei jeweils an dessen Enden angeordneten Massivböden (2, 5) verschlossen ist, wobei dieser zylindrische Hohlkörper (1) ein zähflüssiges Medium enthält sowie ein in diesem zähflüssigen Medium eingetauchtes und innen in dem zylindrischen Hohlkörper (1) koaxial und elastisch montiertes zylinderförmiges Massivteil (5)

– das zähflüssige Medium dient zum Dämpfen der Relativbewegungen des Massivteils (5) zu diesem zylindrischen Hohlkörper (1) – und eine koaxial zu diesem zylindrischen Hohlkörper (1) angeordnete Metallstange (6, 7) zum Festhalten des Massivteils (5) dadurch gekennzeichnet, dass das Massivteil (5) mit der das elastische Element bildenden Metallstange (6, 7) fest verbunden ist, die den zylindrischen Hohlkörper mit dem Massivteil (5) verbindet, wobei zum Einstellen der auf diese Stange (6, 7) ausgeübte Spannungskraft die freien an dem Massivteil (5) nicht angeschlossenen Enden der Metallstange (6, 7) an den Massivböden (2, 3) über Mittel (20, 15) befestigt sind, und durch die Wirkung der zu dämpfenden Schwingungen die Elastizität der Stange (6, 7) Wechselbewegungen des Massivteils (5) gemäss zu der Achse dieses zylindrischen Hohlkörpers (1) radialen Richtungen zulässt.

2. Dämpfungsvorrichtung nach Anspruch 1, dadurch gekennzeichnet, dass zur Beschränkung der Menge des in diesen Hohlkörper einzufüllenden zähflüssigen Mediums zum vollständigen Eintauchen des zylindrischen Massivteils (5) inerte Körper (26, 28) innen in dem zylindrischen Hohlkörper (1) angeordnet sind.

3. Dämpfungsvorrichtung nach einem der Ansprüche 1 und 2, dadurch gekennzeichnet, dass zwecks Einstellen der Stangenspannung mindestens ein Boden (2, 3) des zylindrischen Hohlkörpers in seiner Mitte eine Öffnung zum Durchführen jeweils eines Endteils der Stange (6, 7) aufweist, das zur Aufnahme einer Stellmutter mit einem Gewinde versehen ist.

4. Dämpfungsvorrichtung nach einem der Ansprüche 1 und 2, dadurch gekennzeichnet, dass mindestens ein Boden (2, 3) des zylindrischen Hohlkörpers eine mittige Öffnung zum Durchführen jeweils eines Endteils der Stange (6, 7) aufweist, und dass zur Beaufschlagung der Stange mit einer wechselnden Zugkraft ein Hydraulikzylinder (20) an diesem Boden befestigt ist.

5. Dämpfungsvorrichtung nach einem der Ansprüche 1 bis 4, bei einer Umlaufmaschine, dadurch gekennzeichnet, dass der zylindrische Hohlkörper an der Umlaufmaschine (32) derart befestigt ist, dass dessen Achse parallel zur Rotationsachse der Maschine ist.

6. Dämpfungssatz für eine Umlaufmaschine, dadurch gekennzeichnet, dass mindestens zwei Vorrichtungen (30, 31) nach einem der Ansprüche 1 bis 5 an der Peripherie der Umlaufmaschine befestigt sind, wobei deren Achse parallel zur Rotationsachse dieser Maschine (32) ist.

**Claims**

1. Vibration damping device for a machine or structure, comprising a hollow cylindrical body (1) provided with means for connecting it to the machine or structure and closed by two solid end pieces (2, 3) disposed one at each of its ends, said hollow cylindrical body (1) containing a viscous liquid, a solid member (5) immersed in the viscous liquid and mounted resiliently coaxially inside the hollow cylindrical body (1), the viscous liquid making it possible to damp the relative movements of the solid member (5) in relation to the said hollow cylindrical body (1), and a metal rod (6, 7) disposed coaxially to the hollow cylindrical body (1) in order to support the solid member (5), this device being characterised in that the solid member (5) is fastened to the metal rod (6, 7), the metal rod (6, 7) constitutes the resilient member connecting the hollow cylindrical body to the solid member (5), the ends of the metal rod (6, 7) not connected to the solid member (5) are fixed to the solid end pieces (2, 3) via means (20, 15) which permit the regulation of the intensity of the tension applied to said rod (6, 7) and, through the action of the vibrations which are to be damped, the elasticity of said rod (6, 7) permits reciprocating movements of the solid member (5) in radial directions relative to the axis of said hollow cylindrical body (1).

2. Damping device according to Claim 1, charcterised by the fact that dead bodies (26, 28) are disposed inside the hollow cylindrical body (1) in order to limit the volume of viscous liquid to be introduced into said hollow body for the complete immersion of the solid cylindrical member (5).

3. Damping device according to either of Claims 1 and 2, characterised by the fact that at least one of the end pieces (2, 3) of the hollow cylindrical body has pierced in its central part an opening through which passes one of the end portions of the rod (6, 7) which is threaded and adapted to receive a tightening nut (15) permitting regulation of the tension of the rod.

4. Damping device according to either of Claims 1 and 2, characterised by the fact that at least one of the end pieces (2, 3) of the hollow cylindrical body has pierced in it a central opening through which passes one of the end portions of the rod (6, 7), and that a hydraulic jack (20) is fixed on this end piece in order to exert traction of variable intensity to the rod.

5. Damping device according to any one of Claims 1 to 4, in the case of a rotating machine, characterised by the fact that the hollow cylindrical body is fixed on the rotating machine (32) in such a manner that its axis is parallel to the axis of rotation of the machine.

6. Damping unit associated with a rotating machine, characterised by the fact that at least two devices (30, 31) according to any one of Claims 1 to 5 are fixed to the periphery of the rotating machine, with their axis parallel to the axis of rotation of said machine (32).

Fig 1

Fig 2